# EUROPEAN PATENT APPLICATION

(11) **EP 4 063 539 A1**
(43) Date of publication of application: **28.09.2022**
(21) Application number: 22161786.3
(22) Date of filing: 14.03.2022
(51) Int. Cl.: C25D 1/00, C25D 1/02, C25D 7/04, C25D 11/26, H01M 4/1395, H01M 4/29, H01M 4/66, H01M 4/76, C25D 5/38, C25D 11/20, H01M 4/38

(54) **A METHOD FOR PREPARING A TITANIUM NANOTUBE ELECTRODE**

(30) Priority: 24.03.2021 IN 202141012883
(71) Applicant: TVS Motor Company Limited, 600006 Chennai (IN)
(72) Inventor: Payangappadan, Kiran, 600 006 Chennai (IN); Sokka, Gopinath Hariram, 600 006 Chennai (IN); Nileshwar Rao, Pramila, 600 006 Chennai (IN); Dhinagar, Samraj Jabez, 600 006 Chennai (IN)
(74) Representative: Patentanwaltskanzlei Matschnig & Forsthuber OG

(57) **Abstract**

The present invention is directed to a method for preparing a titanium nanotube electrode. The method includes the steps of: pre-treating a titanium substrate at least by pickling in an acid at a temperature ranging between 40°C to 80°C; subjecting the pre-treated titanium substrate to anodization at a voltage ranging between 10V to 30V to obtain titanium nanotubes having diameter less than 50nm; and electrodepositing one or more Group IVA element on the titanium nanotubes to obtain the titanium nanotube electrode.

## Description

### FIELD OF THE INVENTION

The present invention relates to a method for preparing a titanium nanotube electrode.

### BACKGROUND OF THE INVENTION

A Lithium-ion (Li-ion) battery is a type of rechargeable battery commonly used for portable electronics and electric vehicles. In the Li-ion batteries, lithium ions move from a negative electrode through an electrolyte to a positive electrode during discharge, and back when charging. These batteries have a high energy density and low self-discharge.

For developing a high-performance electrode having higher capacity, as many Li-ions are packed in the electrode so that the electrochemical reaction is able to involve a higher stoichiometric ratio of Li-ions during charging and discharging process.

In the existing Li-ion batteries, an anode material (in a slurry) is applied on a copper current collector, a cathode material is applied on another copper current collector, and an electrolyte is positioned between both the current collectors. Over the period of time, these Li-ion batteries have evolved with graphite being commonly employed as the anode material and metal oxides such as LiCoO₂, LiMn₂O₄, or phosphates such as LiFePO₄ as suitable cathode materials. Conductive additives (for e.g. carbon material) and polymer binders (such as polytetrafluoroethylene and styrene-butadiene rubber) have been found suitable as slurry. Particularly, the anode material is obtained by coating the graphite (in the slurry) onto the copper current collector made of Cu/AI foil followed by calendaring into a thin film.

More widely, the anode is prepared by applying a mixture of the graphite powder, binder material such as styrene-butadiene rubber, thermal conductive enhancers in definite ratios and solvent (typically water) onto the copper collector. Despite graphite being used extensively, there are certain limitations associated which have resulted in finding alternative anode materials. For instance, graphite anodes have been found to have low energy density and upon continuous usage, the graphite anode experiences volumetric expansion of up to 50%. This might be more of a safety concern than performance.

As an alternative to graphite, silicon and titanium (as titanium dioxide) have been reported as suitable anode materials. However, with silicon, although the energy density was found to be sufficiently higher than graphite, volumetric expansion and high cost render it a less desirable anode material.

With titanium dioxide based anodes, there has been no volumetric expansion reported so far. However, the energy density is low, and lifespan of the anode is only limited to about 10000 - 40000 charge and discharge cycles. Moreover, due to lithium intercalation and de-intercalation during charging and discharging, the capacity of Li-ions that can be packed in the anode has reduced, thereby resulting in limited energy density. Furthermore, the bulk metal oxides such as titanium dioxide have also reported poor transport kinetics that slows down the migration of Li-ions, thereby resulting in slow battery charging.

Titanium neodymium has also been found to be a promising anode material with increased energy density, enabling fast charging, and a lifespan greater than 10000 charge and discharge cycles. Nevertheless, the cumbersome and expensive preparation technique for titanium neodymium has led to an extensive research in finding other alternative anode materials.

Thus, there is a need in the art for a method for preparing a titanium nanotube electrode which addresses at least the aforementioned problems.

### SUMMARY OF THE INVENTION

In one aspect, the present invention is directed to a method for preparing a titanium nanotube electrode. The method includes the steps of: pre-treating a titanium substrate at least by pickling in an acid at a temperature ranging between 40°C to 80°C; subjecting the pre-treated titanium substrate to anodization at a voltage ranging between 10V to 30V to obtain titanium nanotubes having diameter less than 50nm; and electrodepositing one or more Group IVA element on the titanium nanotubes to obtain the titanium nanotube electrode.

In an embodiment of the invention, the acid is an aqueous acid solution having a weak acid. The weak acid includes oxalic acid, hydrofluoric acid, hydrochloric acid, and nitric acid. A molar concentration of the acid is in between 0.5 mol/L to 2.0 mol/L.

In another embodiment of the invention, the step of pre-treating the titanium substrate includes: pickling the titanium substrate in the acid for a duration ranging between 0.1 h to 1 h at the temperature ranging between 40°C to 80°C; and sonicating the pickled titanium substrate in the presence of an organic solvent for a duration ranging between 0.1 h to 1 h. The organic solvent is selected from methanol, ethanol, isopropyl alcohol, acetone, mineralized water, and toluene.

In yet another embodiment of the invention, the anodization is carried out for a duration ranging between 1 h to 2 h. The anodization is carried out in the presence of an anodization electrolyte including ethylene glycol, water, and an electrolyte-soluble salt. The electrolyte-soluble salt is selected from potassium fluoride, sodium fluoride and ammonium fluoride.

In still another embodiment, the anodization electrolyte includes 80 wt.% to 99 wt.% of ethylene glycol, 1 wt.% to 10 wt.% of water, and 0.1 wt.% to 1 wt.% of the electrolyte-soluble salt, the wt.% based on the total weight of the anodization electrolyte.

In a further embodiment of the invention, the anodization is carried out at a temperature ranging between 15°C to 40°C.

In a still further embodiment of the invention, the titanium nanotubes have a diameter ranging between 10 nm to 40 nm and a wall thickness ranging between 1 nm to 10 nm.

In another embodiment of the invention, the Group IVA element is silicon and/or tin.

In yet another embodiment of the invention, the step of electrodepositing is carried out in the presence of an electrolyte including an aprotic solvent and a silicon precursor and/or a tin precursor. The electrodepositing is carried out at a temperature ranging between 15°C to 40°C.

In a still further embodiment of the invention, the step of electrodepositing is carried out using chronoamperometry technique.

In another aspect, the present invention is directed to a lithium-ion battery including the titanium nanotube electrode obtained from the above method.

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figure 1 illustrates a method for preparing a titanium nanotube electrode in accordance with an embodiment of the present invention.
Figure 2 shows details of the steps illustrated in Figure 1 in accordance with an embodiment of the present invention.
Figure 3 illustrates a setup for anodization in accordance with an embodiment of the present invention.

### DETAILED DESCRIPTION OF THE INVENTION

Various features and embodiments of the present invention here will be discernible from the following further description thereof, set out hereunder.

In one aspect, the present invention relates to a method for preparing a titanium nanotube electrode.

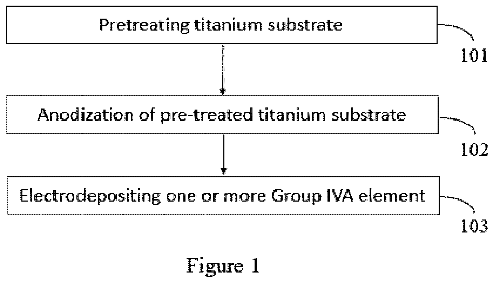

As shown in Figure 1, at step 101, a titanium substrate is pre-treated at least by pickling in an acid at a temperature ranging between 40°C to 80°C. Thereafter, at step 102, the pre-treated titanium substrate is subjected to anodization at a voltage ranging between 10V to 30V to obtain titanium nanotubes having diameter less than 50nm. At step 103, electrodepositing one or more Group IVA element on the titanium nanotubes results in the titanium nanotube electrode being formed.

In the present context, the titanium substrate includes a titanium foil. Further, the titanium substrate can have any suitable dimension.

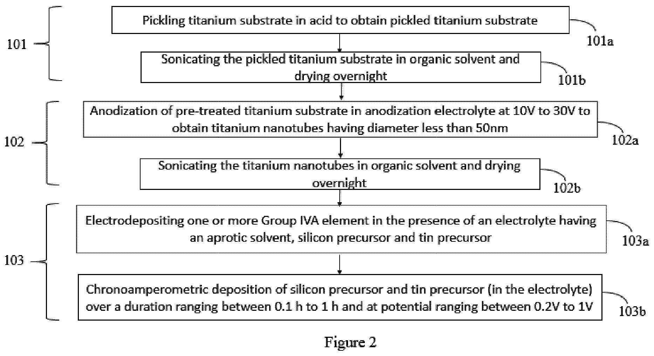

Referring to Figure 2, as shown at step 101a, during pre-treating the titanium substrate is pickled in the acid to obtain a pickled titanium substrate. The acid acts as a pickling agent and performs the surface treatment of the titanium substrate to render it free of impurities, stains, inorganic contaminants, scales, and the likes.

In an embodiment, the acid is an aqueous solution of a weak acid. Suitable weak acids include oxalic acid, hydrofluoric acid, hydrochloric acid, and nitric acid. The aqueous acid solution has a molar concentration of the acid, particularly weak acid, in between 0.5 mol/L to 2.0 mol/L. In one embodiment, the molar concentration is in between 0.5 mol/L to 1.5 mol/L, or in between 0.75 mol/L to 1.25 mol/L. In another embodiment, the molar concentration is 2.0 mol/L.

The pickled titanium substrate is sonicated in the presence of an organic solvent for a duration ranging between 0.1 h to 1 h. This is shown at step 101b. In the present context, sonicating refers to rinsing the titanium substrate in the organic solvent. Suitable organic solvent is selected from methanol, ethanol, isopropyl alcohol, acetone, mineralized water, and toluene.

The pre-treated titanium substrate obtained after the pre-treating step is now subjected to anodization at step 102a. During the anodization, the applied voltage ranges between 10V to 30V to obtain titanium nanotubes having diameter less than 50nm. In an embodiment, the voltage is 10V.

The anodization is carried out for a duration ranging between 1 h to 2 h at a temperature ranging between 15°C to 40°C. In an embodiment, the duration is 1.5 h at 25°C. Accordingly, in one embodiment, the pre-treated titanium substrate is subjected to anodization at 10V for 1.5 h at 25°C.

Typically, the anodization step is carried out in the presence of an anodization electrolyte. The anodization electrolyte includes ethylene glycol, water, and an electrolyte-soluble salt. The electrolyte-soluble salt can be selected from potassium fluoride, sodium fluoride and ammonium fluoride. In one embodiment, the electrolyte-soluble salt is ammonium fluoride.

In an embodiment, the anodization electrolyte contains 80 wt.% to 99 wt.% of ethylene glycol, 1 wt.% to 10 wt.% of water, and 0.1 wt.% to 1 wt.% of the electrolyte-soluble salt, the wt.% based on the total weight of the anodization electrolyte.

In another embodiment, the anodization electrolyte contains 90 wt.% to 99 wt.% of ethylene glycol, 4 wt.% to 8 wt.% of water, and 0.4 wt.% to 0.8 wt.% of the electrolyte-soluble salt.

In yet another embodiment, the anodization electrolyte contains 90 wt.% to 95 wt.% of ethylene glycol, 4 wt.% to 6 wt.% of water, and 0.4 wt.% to 0.6 wt.% of the electrolyte-soluble salt.

As a result of anodization, titanium nanotubes having diameter less than 50nm are obtained. Particularly, the titanium nanotubes are titanium dioxide nanotubes which have been formed during anodization.

The titanium nanotubes have a diameter ranging between 10 nm to 40 nm and a wall thickness ranging between 1 nm to 10 nm.

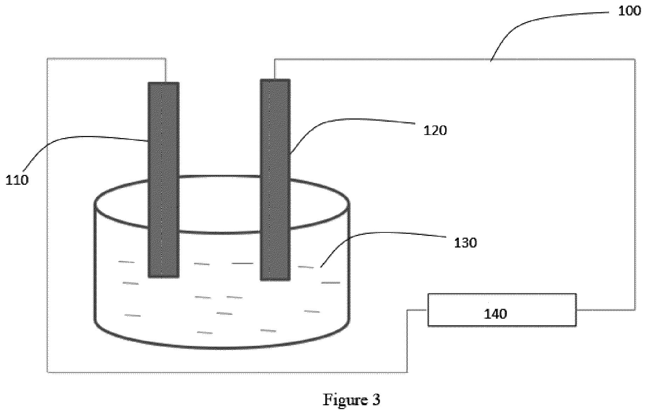

A typical setup for anodization 100 is shown in Figure 3. The pickled titanium substrate 110 obtained after pre-treatment is used as an anode dipped in the anodization electrolyte 130. A suitable cathode 120 is also dipped in the anodization electrolyte with a potentiometer 140 coupled with the anode and the cathode for measuring the potential difference.

In one embodiment, as shown at step 102b, the titanium nanotubes are sonicated in the presence of the organic solvent and dried overnight.

Subsequently, at step 103a, the one or more Group IVA elements are electrodeposited on the titanium nanotubes. In an embodiment, the Group IVA element is silicon and/or tin. Particularly, a silicon precursor and a tin precursor is used for this purpose. In this regard, stannous fluoride can be used as a suitable tin precursor, while silicon tetrachloride for silicon precursor.

The electrodepositing is typically carried out in the presence of an electrolyte having an aprotic solvent and the silicon precursor and/or the tin precursor.

Typically, the molar concentration of the silicon precursor is in between 0.1 mol/L to 1.0 mol/L, or in between 0.3 mol/L to 0.6 mol/L. The molar concentration of the tin precursor is also in between 0.1 mol/L to 1.0 mol/L, or in between 0.3 mol/L to 0.6 mol/L.

Suitable aprotic solvents can be selected from propylene carbonate, ethylene carbonate, and ethylene thiocarbonate. In one embodiment, the aprotic solvent is propylene carbonate.

Suitable temperature for carrying out the electrodepositing ranges between 15°C to 40°C. In an embodiment, the electrodepositing is carried out using chronoamperometry technique, as shown at step 103b. During chronoamperometry, the one or more Group IVA elements are electrodeposited over a duration ranging between 0.1 h to 1 h and at potential ranging between 0.2V to 1V. Thus, the one or more Group IVA elements are electrodeposited on the titanium nanotubes to obtain the titanium nanotube electrode.

In an embodiment, the titanium nanotube electrode obtained using the present invention finds application as an anode in lithium-ion batteries or Li-ion batteries. Further, the titanium nanotube electrode can also be used in 2W, 3W, and 4W energy storage application, power backup and the likes.

Advantageously, the present invention provides for fabrication of self-supported metal oxide (titanium dioxide) nanoarray electrodes without the addition of binders and conductive additives. The present invention also provides an alternate method over slurry coated electrodes and enhances charge transfer efficiency and improved gravimetric capacity.

The self-supported metal oxides (titanium dioxide) nanoarrays on conductive substrates represent promising electrodes with high capacity, high-rate capability and long cycle life for advanced Li-ion batteries.

In contrast to the existing bulk metal oxide electrodes, the nanostructured metal oxide electrodes of the present invention consist of structural units in the range of nanometer scale with higher specific surface area. The increased surface area results in improved electrochemical reaction kinetics and shortened charge transfer pathways, which make it easier for diffusion of Li-ions and electrons even at large current densities during charge and discharge cycles. The titanium nanotube anodes also result in fast electron transport, improved charge transfer efficiency and free space for alleviating volume expansion and preventing severe aggregation.

### EXAMPLES

The following experimental examples are illustrative of the invention but not limitative of the scope thereof:

### Pre-treatment

A titanium (Ti) foil sample was pretreated at several levels before anodization. Initially, the Ti foil was pickled with 2 M oxalic acid for 30 minutes at 60°C. Thereafter, the pickled Ti foil was sonicated in acetone, isopropanol & Millipore water for 15 minutes each. The sample was kept for overnight drying.

### Anodization

The pre-treated Ti foil was cut in 'L' shaped pieces having dimensions of 1 cm x 1 cm for use as anode (working electrode). Platinum mesh with dimensions of 2.5 cm x 2.5 cm was used as cathode (counter electrode). Anodization electrolyte was a mixture of 94.5 wt.% ethylene glycol, 5 wt.% water and 0.5 wt.% ammonium fluoride. The anodization was carried out by applying different voltages for a fixed duration of 1 hour. After the anodization, the sample was again sonicated in Millipore water for 5 minutes and dried overnight to obtain titanium nanotubes.

The effect of anodization time on the titanium nanotubes is summarized in Table 1 below.

**Table 1: Effect of anodization time on the titanium nanotubes**

| **Anodization Time** | **Titanium nanotube diameter (nm)** |
|---|---|
| 1 hour | 14.2 |
| 1 hour 15 minutes | 17.8 |
| 1 hour 30 minutes | 20.9 |
| 2 hours | 27.9 |

The effect of anodization voltage on the titanium nanotubes is summarized in Table 2 below.

**Table 2: Effect of anodization voltage on the titanium nanotubes**

| **Anodization Voltage (V)** | **Titanium nanotube wall thickness (nm)** | **Titanium nanotube diameter (nm)** |
|---|---|---|
| 10 | 3.74 | 10.78 |
| 15 | 4.10 | 20.85 |
| 20 | 4.20 | 27.54 |
| 25 | 5.45 | 33.60 |
| 30 | 7.47 | 41.02 |

It was observed that anodization potential had a strong influence on the titanium nanotube formation. Anodization from 10 to 30 V for 1 hour resulted in titanium nanotubes having diameter ranging from 10 nm to 40 nm and wall thickness ranging between 3.7 nm to 7.4 nm.

### Electrodeposition

Silicon (Si) and tin (Sn) deposition on the titanium nanotube was done for 30 minutes by using three electrode system. In this system, the titanium nanotube formed foil, platinum and Ag/AgCI were used as anode, counter, and reference electrodes, respectively.

Stannous fluoride (SnF₂) was used as the Sn precursor and was prepared by evaporating a solution of SnO in 40% hydrofluoric acid. Silicon tetrachloride (SiCl₄) was used as Si precursor. The aprotic solvent user here was propylene carbonate, wherein 0.5 M SiCl₄ and 0.5 M SnF₂ were added to obtain the electrolyte.

For deposition of Si and Sn on the titanium nanotube, chronoamperometry technique was used. The mixture of 0.5 M SiCl₄ and 0.5 M SnF₂ in propylene carbonate (electrolyte) was deposited at a potential of 0.5V for 1800 seconds at 25°C. The titanium nanotube anode was thus obtained.

While the present invention has been described with respect to certain embodiments, it will be apparent to those skilled in the art that various changes and modification may be made without departing from the scope of the invention as defined in the following claims.

## Claims

1. A method for preparing a titanium nanotube electrode, the method comprising the steps of:
pre-treating (101) a titanium substrate at least by pickling in an acid at a temperature ranging between 40°C to 80°C;
subjecting the pre-treated titanium substrate to anodization (102) at a voltage ranging between 10V to 30V to obtain titanium nanotubes having diameter less than 50nm; and
electrodepositing (103) one or more Group IVA element on the titanium nanotubes to obtain the titanium nanotube electrode.

2. The method as claimed in claim 1, wherein the acid is an aqueous acid solution comprising a weak acid.

3. The method as claimed in claim 2, wherein the weak acid is selected from: oxalic acid, hydrofluoric acid, hydrochloric acid, and nitric acid.

4. The method as claimed in claim 1, wherein a molar concentration of the acid is in between 0.5 mol/L to 2.0 mol/L.

5. The method as claimed in claim 1, wherein pre-treating the titanium substrate comprises:
pickling the titanium substrate in the acid for a duration ranging between 0.1 h to 1 h at the temperature ranging between 40°C to 80°C, and sonicating the pickled titanium substrate in the presence of an organic solvent for a duration ranging between 0.1 h to 1 h.

6. The method as claimed in claim 5, wherein the organic solvent is selected from methanol, ethanol, isopropyl alcohol, acetone, mineralized water, and toluene.

7. The method as claimed in claim 1, wherein the anodization is carried out for a duration ranging between 1 h to 2 h.

8. The method as claimed in claim 1, wherein the anodization is carried out in the presence of an anodization electrolyte comprising ethylene glycol, water, and an electrolyte-soluble salt.

9. The method as claimed in claim 8, wherein the electrolyte-soluble salt is selected from potassium fluoride, sodium fluoride and ammonium fluoride.

10. The method as claimed in claim 8, wherein the anodization electrolyte comprises: 80 wt.% to 99 wt.% of ethylene glycol, 1 wt.% to 10 wt.% of water, and 0.1 wt.% to 1 wt.% of the electrolyte-soluble salt, the wt.% based on the total weight of the anodization electrolyte.

11. The method as claimed in claim 1, wherein the anodization is carried out at a temperature ranging between 15°C to 40°C.

12. The method as claimed in claim 1, wherein the titanium nanotubes have a diameter ranging between 10 nm to 40 nm and a wall thickness ranging between 1 nm to 10 nm.

13. The method as claimed in claim 1, wherein the Group IVA element is silicon and/or tin.

14. The method as claimed in claim 1, wherein the electrodepositing is carried out in the presence of an electrolyte comprising an aprotic solvent and a silicon precursor and/or a tin precursor.

15. The method as claimed in claim 1, wherein the electrodepositing is carried out at a temperature ranging between 15°C to 40°C.

16. The method as claimed in any of the preceding claims, wherein the electrodepositing is carried out using chronoamperometry technique.

17. A lithium-ion battery comprising the titanium nanotube electrode obtained from the method as claimed in any of the preceding claims.
